# EUROPEAN PATENT SPECIFICATION

(11) **EP 4 489 979 B1**
(45) Date of publication and mention of the grant of the patent: **26.11.2025**
(21) Application number: 22712369.2
(22) Date of filing: 09.03.2022
(51) Int. Cl.: B60B 39/00, H05B 1/02, B60C 99/00

(54) **A TYRE HEATING SYSTEM, AND A METHOD OF CONTROLLING A TYRE HEATING SYSTEM**
SYSTEM ZUR REIFENERWÄRMUNG UND VERFAHREN DER KONTROLLE EINES REIFENERWÄRMSYSTEMS
SYSTEME DE CHAUFFAGE DE PNEU ET PROCEDE DE COMMANDE D'UN SYSTEME DE CHAUFFAGE DE PNEU

(43) Date of publication of application: 15.01.2025
(73) Proprietor: VOLVO TRUCK CORPORATION, 405 08 Göteborg (SE)
(72) Inventor: LINDBERG, Johan, 415 33 GÖTEBORG (SE); LAINE, Leo, 438 94 HÄRRYDA (SE)
(74) Representative: Kransell & Wennborg KB
(86) International application number: PCT/EP2022/056070
(87) International publication number: WO 2023/169671

(56) References cited:
- CN-B- 102 745 024
- DE-A1- 102016 110 991

## Description

### TECHNICAL FIELD

The present invention relates to a tyre heating system of a vehicle. The invention also relates to a method of controlling a tyre heating system of a vehicle. Although the invention will mainly be directed to a heavy-duty vehicle in the form of a truck, the invention may also be applicable for other types of vehicles comprising an electric power system which is configured to generate electric power.

### BACKGROUND

Electrically propelled vehicles, i.e. vehicles using an electric traction machine for propulsion, are increasingly popular as they are more environmentally friendly compared to a vehicle solely using an internal combustion engine for propulsion. Such electrically propelled vehicles may be pure electrically propelled vehicles, also referred to as battery electric vehicles (BEV), as well as vehicles using an electric machine in combination with an internal combustion engine, also referred to as hybrid electric hybrid electric vehicles (HEV). As a further option, vehicles using a fuel cell for generating power are also developed. Such vehicles are also referred to as fuel cell electric vehicles (FCEV).

Although vehicles using an electric machine for its propulsion is more environmentally friendly compared to a vehicle solely using an internal combustion engine for its propulsion, the range capacity for the electric machine is still a challenge in order to fully compete with the internal combustion engine. The range capacity is, amongst other parameters, dependent on the resistive loads exposed to the vehicle. During high speed operation, the rolling resistance as well as the air drag resistance are two significant parameters affecting the operating range. During low speed operation, the air drag resistance is less relevant, while the rolling resistance is still a significant contributor to the operating range.

According to its abstract, DE 10 2016 110991 A1 relates to an electrified vehicle that includes, among other things, a tire and an electrically powered heating device configured to selectively warm the tire. The heating device may be powered during on-plug conditions to precondition the tire.

There is thus a desire to reduce to further increase the operating range for a vehicle at least partly propelled by an electric machine. In particular, there is a desire to reduce the resistive loads negatively affecting the vehicle during operation.

### SUMMARY

It is thus an object of the present invention to at least partially overcome the above described deficiencies.

According to a first aspect, there is provided a tyre heating system for a vehicle, the tyre heating system comprising an electric power system, the electric power system being configured to assume an energy generating mode in which the electric power system generates electric power, an energy storage system electrically connected to the electric power system, a tyre heating arrangement electrically connected to the electric power system, the tyre heating arrangement being configured to heat a tyre of a wheel of the vehicle by electric power received from the electric power system, and a control unit connected to the electric power system and to the energy storage system, the control unit comprising control circuitry configured to determine an energy power absorption capability of the energy storage system; compare the energy power absorption capability with the electric power generated by the electric power system when the electric power system assumes the energy generating mode; and control the electric power system to feed electric power to the tyre heating arrangement when the electric power generated in the energy generating mode exceeds the energy power absorption capability.

The electric power system should be construed as a system comprising at least one component which is configured to generate electric power. The electric power generating component must not generate power at all times but should at least be able to generate power during the power generating mode. As will be described below, the electric power system may comprise an electric traction motor, and/or a fuel cell arrangement.

The tyre heating arrangement should be construed as an arrangement which is able to increase the temperature of the tyre. In particular, the surface in contact with the ground surface should be heated by the tyre heating arrangement. The tyre heating arrangement thus receives electric power from e.g. the electric traction motor and/or from the fuel cell arrangement. As will be described in further detail below, the tyre heating arrangement may be formed by a structure radiating heat towards the external surface of the tyre, or a structure embedded in the tyre material. The structure radiating heat towards the external surface of the tyre may be formed by e.g. an infrared heat radiator. As an alternative, the structure may be formed by a compressor feeding pressurized, and heated air towards the external surface of the tyre. Such compressor is thus operated by electric power fed from the electric power system.

Furthermore, the energy absorption capability should be construed as the level of electric power the energy storage system is able to receive and/or the amount of generated electric power per time unit the electric power system is able to receive. Hence, and as will be described further below, the energy storage system may be able to receive a certain amount of electric power until the state of charge (SoC) is reaching an upper, maximum threshold limit. The energy storage system may also be able to receive a certain amount of electric power per time unit, i.e. a maximum "flow velocity of electric power".

The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

The present invention is based on the unexpected insight that excessive electric power can be used for heating the tyres of the vehicle. Thus, instead of dissipating, i.e. wasting, the excessive electric power, the excess electric power is used for heating the tyres. An advantage is thus that the tyres are heated during operation of the vehicle which will reduce the rolling resistance and in turn increase the range capacity of the vehicle. Accordingly, the operating range, i.e. the mileage, of the vehicle when operated by an electric traction motor will be increased. Examples of when the tyres can be heated will be given in further detail below.

According to an example embodiment, the electric power system may comprise an electric traction motor configured to apply a torque on the wheel of the vehicle during propulsion and to generate electric power during braking, the electric power system being configured to assume the energy generating mode when the electric traction motor generates electric power during braking.

During e.g. downhill operation where the electric traction motor is operated to generate electric power, the electric power can hereby be fed from the electric traction motor to the tyre heating arrangement for heating the tyre. Thus, electric power is in such case, when the electric power generated by the electric traction motor exceeds the energy absorption capability of the energy storage system, fed from the electric traction motor to the tyre heating arrangement, and not from the electric traction motor to the energy storage system.

According to an example embodiment, the electric traction motor may be an electric wheel hub motor connectable to a single wheel of the vehicle. The electric power can thus be rapidly fed to from the electric wheel hub motor to the tyre heating arrangement, which tyre heating arrangement is positioned in the vicinity of the electric wheel hub motor.

According to an example embodiment, the electric power system may comprise a fuel cell arrangement comprising at least one fuel cell stack, the electric power system being configured to assume the energy generating mode when the at least one fuel cell stack generates electric power.

Hereby, electric power is fed from the fuel cell arrangement to the tyre heating arrangement. A fuel cell arrangement should preferably be operated continuously. Hence, shutting off the fuel cell arrangement is not preferable as it will degrade the fuel cell over time. Thus, feeding electric power from the fuel cell arrangement is advantageous as it will both increase the temperature of the tyre as well as allowing the fuel cell arrangement to continuously generate electric power irrespective of the status of the energy storage system. For example, during idle operation of an electric traction motor, the fuel cell can still be operated to generate electric power which is fed to the tyre heating arrangement.

According to an example embodiment, the fuel cell arrangement may be electrically connected to the energy storage system. Thus, electric power can be fed to the tyre heating arrangement as well as to the energy storage system, depending on the operating condition of e.g. the energy storage system, etc.

According to an example embodiment, the tyre heating arrangement may comprise a heat radiator connectable to a wheelhouse for the wheel. The heat radiator is thus preferably arranged in the vicinity of the wheel for radiating heat towards the tyre surface. According to an example embodiment, the heat radiator may be an infrared heat radiator.

According to an example embodiment, the tyre heating arrangement may comprise an electrically conductive heating element integrated in the tyre, the electrically conductive heating element comprising an electric resistive material. Hereby, the tyre is heated "from inside" as the electrically conductive heating element is preferably embedded in the tyre material.

According to an example embodiment, the tyre heating system may further comprise a temperature sensor configured to measure a temperature level of the tyre, the temperature sensor being connected to the control unit. An advantage is that the control circuitry may receive a signal indicative of the tyre temperature, whereby excessive temperature of the tyre can be avoided by omitting from heating the tyre too much. The tyre heating system may also comprise a pressure sensor which is configured to detect/measure a pressure level of the tyre. As the temperature of the tyre increases, the pressure will increase. The temperature sensor and the pressure sensor may be formed by one and the same sensor. The control circuitry thus ensures that the temperature and/or the pressure of the tyre is within acceptable limits.

According to an example embodiment, the control circuitry may be further configured to receive a signal indicative of an expected vehicle speed for the vehicle at an upcoming point in time, estimate a temperature level of the tyre when operating the vehicle at a vehicle speed higher than the expected vehicle speed, and control the electric power system to feed electric power to the tyre heating arrangement until a signal indicative of a temperature level of the tyre corresponding to the estimated temperature level for operating the vehicle at the higher speed is received from the temperature sensor.

Hereby, the tyre can be heated to a temperature which is higher than the expected temperature for the speed at which the vehicle will travel. According to a non-limiting example, the tyre can be heated to a temperature which corresponds to a tyre temperature when operating the vehicle at e.g. 85 kilometres per hour when driving at slow speed such as below 10 kilometres per hour. This will reduce the rolling resistance as well as providing a buffer heat for subsequent operation when the generated electric power might have to be fed to the energy storage system for e.g. maintaining a desired SoC level.

As was briefly described above, and according to an example embodiment, the control circuitry may be configured to determine the energy power absorption capability based on a current state of charge (SoC) of the energy storage system. As an alternative or complement, and according to an example embodiment, the control circuitry may be configured to determine the electric power absorption capability based on a current temperature level of the energy storage system.

According to an example embodiment, the control unit may form part of an upper layer vehicle motion control system, and wherein the electric power system comprises an electric power system control unit connected to the upper layer vehicle motion control system, the control circuitry being configured to control the electric power system by transmitting a signal to the electric power system control unit, the signal represents instructions which, when executed by the electric power system control unit, cause the electric power system to feed electric power to the tyre heating arrangement when the electric power generated in the energy generating mode exceeds the energy power absorption capability.

According to an example embodiment, the tyre heating system may comprise a plurality of electric power systems, each one of the plurality of electric power systems comprising a respective electric power system control unit and is connected to a respective tyre heating arrangement, wherein the upper layer vehicle motion control system is configured to control each of the plurality of electric power systems independently from the other electric power systems.

An advantage is that the upper layer vehicle motion control system can coordinate the control of the plurality of electric power systems which will improve the overall electric power consumption of the vehicle.

According to a second aspect, there is provided a method of controlling a tyre heating system for a vehicle, the tyre heating system comprising an electric power system configured to generate electric power, wherein the method comprises determining an energy power absorption capability of an energy storage system of the vehicle; comparing the energy power absorption capability with the electric power generated by the electric power system; and feeding electric power to a tyre heating arrangement when the electric power generated by the electric power system exceeds the energy power absorption capability.

Effects and features of the second aspect are largely analogous to those described above in relation to the first aspect.

According to a third aspect, there is provided a vehicle, comprising a tyre heating system according to any one of the embodiments described above in relation to the first aspect.

According to a fourth aspect, there is provided a computer program comprising program code means for performing the steps of the above described second aspect when the program is run on a computer.

According to a fifth aspect, there is provided a computer readable medium carrying a computer program comprising program means for performing the steps of the above described second aspect when the program means is run on a computer.

Effects and features of the third, fourth and fifth aspects are largely analogous to those described above in relation to the first aspect.

Further features of, and advantages will become apparent when studying the appended claims and the following description. The skilled person will realize that different features may be combined to create embodiments other than those described in the following, without departing from the scope of the present invention.

### BRIEF DESCRIPTION OF THE DRAWINGS

The above, as well as additional objects, features, and advantages, will be better understood through the following illustrative and non-limiting detailed description of exemplary embodiments, wherein:
Fig. 1 is a lateral side view illustrating an example embodiment of a vehicle in the form of a truck;
Fig. 2 is a schematic illustration of a tyre heating system according to an example embodiment;
Fig. 3 is a schematic illustration of a tyre heating system according to another example embodiment;
Fig. 4 is an illustration of a tyre heating arrangement according to an example embodiment;
Fig. 5 is a flow chart of a method of controlling a tyre heating system according to an example embodiment,
Fig. 6 illustrates control modules for operating the tyre heating system according to an example embodiment.

### DETAILED DESCRIPTION

The present invention will now be described more fully hereinafter with reference to the accompanying drawings, in which exemplary embodiments are shown. The invention may, however, be embodied in many different forms and should not be construed as limited to the embodiments set forth herein; rather, these embodiments are provided for thoroughness and completeness. Like reference character refer to like elements throughout the description.

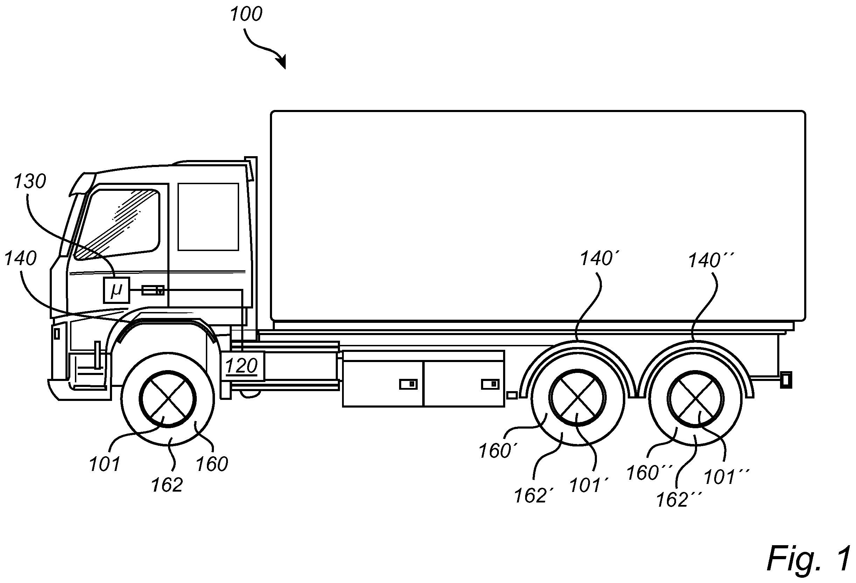

With particular reference to Fig. 1, there is provided a vehicle 1 in the form of a heavy-duty truck for cargo transport. However, a heavy-duty vehicle could also be a vehicle designed for use in construction, mining operations, and the like. It is appreciated that the techniques and devices disclosed herein can be applied together with a wide variety of electrically powered vehicle units, not just that exemplified in Fig. 1. In particular, the techniques disclosed herein are also applicable to, e.g., rigid trucks and multi-trailer electric heavy-duty vehicles comprising one or more dolly vehicle units, etc.

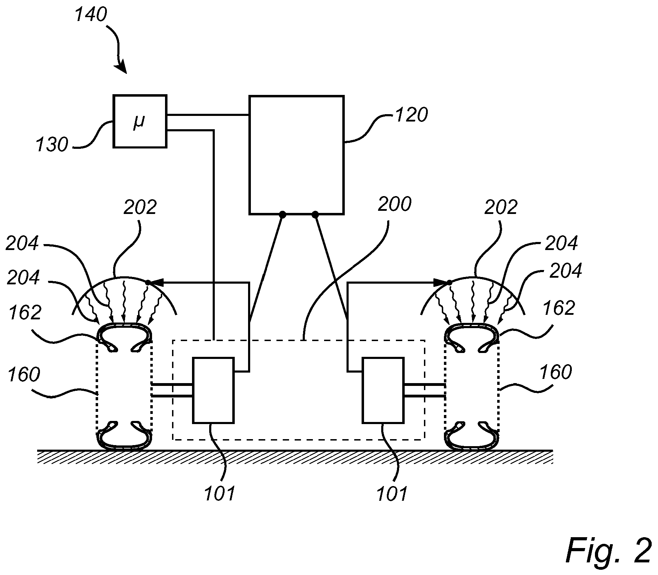

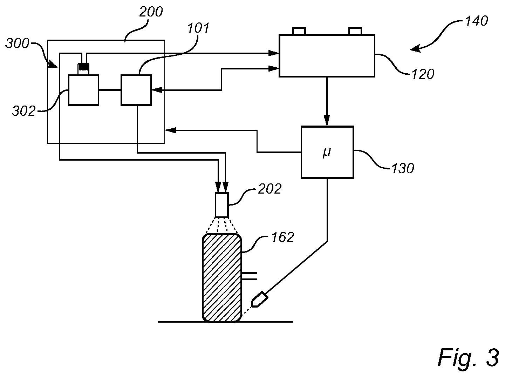

The vehicle 100 is an electrically powered vehicle comprising one or more electric traction motors 101, 101', 101". As can be seen in Fig. 1, the exemplified heavy-duty vehicle comprises an electric traction motor connected to the front steerable wheels 160, the foremost pair of rear wheels 160' and the rearmost pair of rear wheels 160". Each wheel comprises a tyre 162, 162', 162" contacting the road surface during travel. The one or more electric traction motors are arranged to generate both positive and negative torque, i.e., to provide both propulsion and braking of the vehicle 100. As will be described in further detail below, the electric traction motors 101, 101', 101" form part of an electric power system (200 in Figs. 2 and 3). The electric power system is configured to assume an energy generating mode in which the electric power system generates electric power. In the Fig. 1 example embodiment of which the electric traction motors form part of the electric power system, the electric power system assumes the energy generating mode during braking using the electric traction motors. As will be evident from the below description of Fig. 3, the electric power system may also comprise a fuel cell arrangement comprising at least one fuel cell stack configured to generate electric power.

The vehicle 100 also comprises an energy storage system 120 configured to power the one or more electric traction motors. The energy storage system 120 may comprise a battery pack. The energy storage system optionally also comprises a brake resistance arranged to dissipate surplus energy which the electrical energy storage devices on the vehicle cannot accommodate.

A vehicle control unit 130, also simply referred to as a control unit 130, is arranged to monitor and control various vehicle operations and functions. The vehicle control unit is, e.g., arranged to monitor and control the energy storage system 120 as well as the one or more electric traction motors 101, 101', 101", and optionally also the operation of the fuel cell stack. Hence, the control unit 130 is configured to control the electric power system. The vehicle control unit 130 may also comprise, or form part of a higher layer vehicle motion control system comprising control functions such as vehicle route planning and may have access to geographical data comprising height profiles of different planned vehicle routes and the like, as well as positioning data indicating a current location of the vehicle 100.

The vehicle 100 optionally comprises a wireless communications transceiver arranged to establish a radio link to a wireless network comprising a remote server. This way the control unit may access the remote servers for uploading and downloading data. Notably, the vehicle 100 may store measurement data such as amounts of regenerated energy by the one or more electric traction motors 101, 101', 101" at various geographical locations along different vehicle routes in local memory or at the remote server. The vehicle control unit 130 may also query the remote server for information about previously experienced amounts of regenerated energy, and/or temperature increases in various vehicle components along a given route.

The control unit 130 may furthermore be arranged to obtain data indicative of an expected rolling resistance for a given route, either from manual configuration or remotely from the remote server. The rolling resistance of the vehicle 100 will affect the energy consumption of the vehicle as it traverses a route. For instance, a gravel road is likely to require more energy compared to a smoother asphalt freeway. Also, friction and air resistance will reduce the requirements on generating negative torque during downhill driving.

Furthermore, the vehicle comprises a tyre heating system 140, 140', 140". In the example embodiment depicted in Fig. 1, the vehicle 100 comprises an individual tyre heating system 140, 140', 140" for each of the wheels 160, 160', 160", whereby each tyre heating arrangement 140. 140', 140" is configured to controllably heat the tyre of the respective wheel. The following will describe the tyre heating arrangement by means of the tyre heating arrangement 140 arranged to heat the tyres 162 of the front steerable wheels 160.

It is required to be able to brake the vehicle 100 as it travels down steep long hills and the like. The electric traction motors 101, 101', 101" on the vehicle 100 may, as mentioned above, be used to generate braking torque. Electrical energy from the electric traction motors generated during braking can then be fed to the energy storage system as long as the energy storage system can absorb the power, resulting in recuperated energy and a more energy efficient vehicle operation, which is an advantage. However, when the batteries of the energy storage system are fully charged, no more energy can be absorbed. Furthermore, there may be a limit on maximum current or voltage that can be fed to the batteries of the energy storage system when charging, i.e. the energy storage system may have a maximum electric power absorption capability. If the batteries in the energy storage system cannot accept all of the output energy from the electric traction motors, surplus energy can be fed to the brake resistor which then dissipates the surplus energy as heat. However, a brake resistor also has a maximum amount of power it can absorb since it will eventually get too hot. Furthermore, there is normally a peak power capability of the brake resistor, i.e., there may be a limit on maximum current or voltage that can be fed to the brake resistor. Also, the electric traction motors may not at all operating conditions be able to generate the brake power level required for obtaining the desired braking operation.

If the battery on the vehicle 100 is fully charged and if the brake resistor has reached a maximum allowable temperature, there is no safe way of dispersing the power generated from the electric traction motor during braking. This problem can be alleviated somewhat by over-dimensioning the brake resistor, but this solution is not desired since it drives cost and component complexity.

An electrical motor is normally operated at maximum efficiency, meaning that maximum output power is generated during regenerative braking in order to recuperate as much energy as possible during downhill driving. However, it has been realized that there is a control freedom associated with electric traction motors which allow most electric traction motors to be operated at a reduced efficiency. An electric traction motor used to generate braking torque which is operated in a less energy efficient mode of operation will generate more heat and less output current compared to an electric traction motor that is operated at maximum efficiency.

Turning to Fig. 2 which is a schematic illustration of the tyre heating system 140 according to an example embodiment. As described above, the tyre heating system 140 comprises an electric power system 200. In the Fig. 2 example embodiment, the electric power system 200 comprises the electric traction motor 101. When the electric traction motor 101 generates electric power, such as e.g. during braking, the electric power system 200 assumes an energy generating mode.

The tyre heating system 140 also comprises the above described energy storage system 120. The energy storage system 120 is electrically connected to the electric power system 200. Thus, and according to the exemplified embodiment of Fig. 2, the electric traction motor 101 can feed electric power to the energy storage system 120 during braking, i.e. regenerative braking. The energy storage system 120 on the other hand can feed electric power to the electric traction motor 101 during propulsion thereof.

Moreover, the tyre heating system 140 further comprises a tyre heating arrangement 202. The tyre heating arrangement 202 is configured to heat the tyre 162 of the vehicle wheel 160. In detail, the tyre heating arrangement 202 is configured to increase the temperature level of the surface of the tyre 162 in contact with the road surface. In the example embodiment depicted in Fig. 2, the tyre heating arrangement 202 comprises a heat radiator in the form of an infrared heater arranged in the wheelhouse of the vehicle 100, i.e. connected to the wheelhouse of the vehicle 100. The infrared heater hereby emits infrared inductive waves towards the surface of the tyre 162. As an alternative, the infrared heater can be replaced by another heat emitting arrangement, such as e.g. an ultraviolet heater. The tyre heating arrangement 202 is electrically connected to the electric power system 200. The tyre heating arrangement 202 is thus operated to heat the tyre 162 of the vehicle wheel 160 by electric power received from the electric power system 200.

The tyre heating system 140 also comprises the above described control unit 130. The control unit 130 is connected to the electric power system 200 as well as to the energy storage system 120 for receiving information from these modules as well as to control operation of these modules. Operation of the tyre heating system will be given in further detail below.

In order to describe the tyre heating system 140 according to another example embodiment, reference is now made to Fig. 3. The difference between the embodiment depicted in Fig. 2 and the Fig. 3 embodiment is that in Fig. 3, the electric power system 200 further comprises a fuel cell arrangement 300. The fuel cell arrangement 300 comprises at least one fuel cell stack 302 configured to generate electric power by converting the chemical energy of a fuel, e.g. hydrogen, and an oxidizing agent, e.g. oxygen, into electric power. The electric power system 200 hereby assumes the energy generating mode when the fuel cell stack generates electric power.

As also depicted in Fig. 3, the tyre heating system 140 also comprises a temperature sensor 310 connected to the control unit 130. The temperature sensor 310 is configured to detect/measure a temperature level of the tyre. Optionally, the temperature sensor 310 can be configured to also detect/measure a pressure level of the tyre 162. Although the temperature sensor 310 is not depicted and described in relation to Fig. 2, it should be readily understood that the temperature sensor 310 is applicable also for the Fig. 2 example embodiment.

The fuel cell arrangement 300 is electrically connected to the energy storage system 120. Hereby, electric power generated by the fuel cell stack can be fed to the energy storage system 120 such as to charge the energy storage system 120 with electric power. The fuel cell arrangement 300 can also be directly electrically connected to the electric traction motor 101 for feeding electric power to the electric traction motor 101 during propulsion. Moreover, the fuel cell arrangement 300 is also electrically connected to the tyre heating arrangement 202. Thus, the tyre heating arrangement 202 is configured to be operated for heating the surface of the tyre 162 by electric power received from the fuel cell arrangement 300.

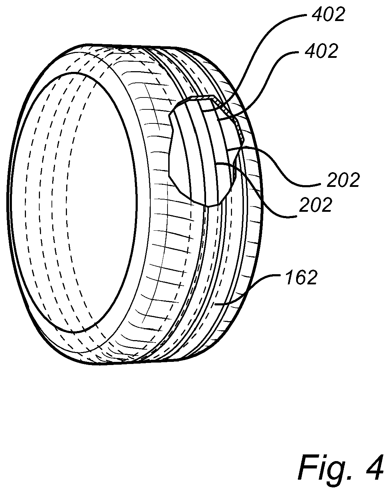

Turning now to Fig. 4 which is a schematic illustration of the tyre heating arrangement 202 according to another example embodiment. In Figs. 2 and 3, the tyre heating arrangement comprises a heat radiator in which heat is radiated towards the tyre 162. In Fig. 4 on the other hand, the tyre heating arrangement 202 comprises an electrically conductive heating element 402 integrated in the tyre. Hence, the electrically conductive heating element 402 is embedded in the tyre 162. In a similar vein as the tyre heating arrangement 202 described above in relation to Figs. 2 and 3, the Fig. 4 tyre heating arrangement 202 is also electrically connected to the electric power system 200 for receiving electric power to heat the tyre. The tyre 162 is hereby heated from "inside". The electrically conductive heating element 402 preferably comprises an electric resistive material.

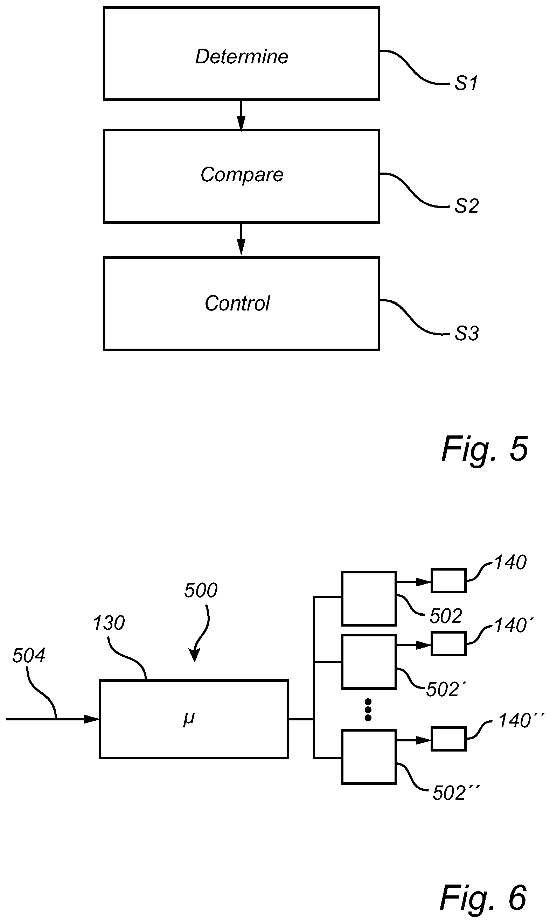

In order to describe the operation of the tyre heating arrangement, reference is made to Fig. 5 which is a flow chart illustrating a method of controlling the tyre heating arrangement 140 according to an example embodiment.

During operation of the vehicle 100, the control unit 130 receives a signal indicative of an energy power absorption capability of the energy storage system 120. The control unit 130 thus determines S1 energy power absorption capability of the energy storage system 120. The energy power absorption capability can, for example, be based on the SoC level of the battery, i.e. how much electric power the energy storage system 120 can receive before being fully charged. The energy power absorption capability may also be based on the temperature level of the energy storage system 120, which may set the rate of electric power receivable by the energy storage system 120.

The control unit 130 compares S2 the energy power absorption capability with the electric power generated by the electric power system 200 when the electric power system 200 assumes the energy generating mode. Hereby, the control unit 130 is able to determine if the generated electric power can be fed from the electric power system 200 to the energy storage system 120 or not. When the electric power generated by the electric power system 200 exceeds the energy absorption capability of the energy storage system 120, the control unit 130 controls S3 the electric power system to instead feed the electric power to the tyre heating arrangement 140. Hereby, electric power dissipation is provided as an increased temperature of the tyre which will efficiently reduce the rolling resistance during operation of the vehicle.

Preferably, and during operation of the vehicle 100, the control unit 130 receives a signal indicative of an expected vehicle speed at an upcoming point in time. Hence, the control unit determines the near future vehicle speed. The upcoming vehicle speed may, as a non-limiting example, be 85 kilometres per hour. The control unit 130 estimates a temperature level of the tyre 162 when the vehicle 100 is operated at a higher speed, as a non-limiting example 140 kilometres per hour. The control unit 130 thereafter controls the electric power system 200 to feed electric power to the tyre heating arrangement 140 such that the tyre is heated to the temperature level expected at the higher vehicle speed, i.e. the tyre temperature that would occur when operating the vehicle 100 at 140 kilometres per hour in the above example. The control unit 130 can thus control the electric power system 200 to feed electric power to the tyre heating arrangement 140 until the control unit 130 receives a signal from e.g. the temperature sensor 310 that such temperature level is reached.

Furthermore, the above described control unit 130 may form part of an upper layer vehicle motion control system. Reference is therefore now made to Fig. 6 for describing this upper layer vehicle motion control system 500 in further detail. In the example embodiment, each pair of wheels 160, 160', 160" comprises an individual tyre heating arrangement 140, 140', 140". Each of the tyre heating arrangements 140, 140', 140" comprises a respective electric power system control unit 502, 502', 502" connected to the upper layer vehicle motion control system 500. The upper layer motion control system 500 can hereby control each of the plurality of tyre heating arrangements 140, 140', 140" independently from the other tyre heating arrangements 140, 140', 140" by transmitting a control signal to a specific electric power system control unit 502, 502', 502".

The upper layer vehicle motion control system 500 is arranged to receive signal 504 indicative of an energy power absorption capability of the energy storage system 120. The upper layer vehicle motion control system 500 may also receive other types of signals, such as e.g. a current weight of the vehicle, etc.

When the upper layer vehicle motion control system 500 receives the signal(s), it compares the energy power absorption capability of the respective energy storage systems 120 with the electric power generated by the respective electric power system 200 and controls the electric power system to feed electric power to the tyre heating arrangement when the electric power generated in the energy generating mode exceeds the energy power absorption capability.

It is to be understood that the present invention is not limited to the embodiments described above and illustrated in the drawings; rather, the skilled person will recognize that many changes and modifications may be made within the scope of the appended claims.

## Claims

1. A tyre heating system (140) for a vehicle (100), the tyre heating system comprising:
- an electric power system (200), the electric power system being configured to assume an energy generating mode in which at least one of an electric traction motor (101) and a fuel cell stack (302) of a fuel cell arrangement (300) of the electric power system generates electric power,
- an energy storage system (120) electrically connected to the electric power system,
- a tyre heating arrangement (202) electrically connected to the electric power system, the tyre heating arrangement being configured to heat a tyre (162) of a wheel (160, 160', 160") of the vehicle by electric power received from the electric power system, and
- a control unit (130) connected to the electric power system and to the energy storage system, the control unit comprising control circuitry configured to:
- determine an energy power absorption capability of the energy storage system;
- compare the energy power absorption capability with the electric power generated by the electric power system when the electric power system assumes the energy generating mode; and
- control the electric power system to feed electric power to the tyre heating arrangement when the electric power generated in the energy generating mode exceeds the energy power absorption capability.

2. The tyre heating system according to claim 1, wherein the electric traction motor is configured to apply a torque on the wheel of the vehicle during propulsion and to generate electric power during braking, the electric power system being configured to assume the energy generating mode when the electric traction motor generates electric power during braking.

3. The tyre heating system according to any one of claims 1 or 2, wherein the electric traction motor is an electric wheel hub motor connectable to a single wheel of the vehicle.

4. The tyre heating system according to any one of the preceding claims, wherein the fuel cell arrangement is electrically connected to the energy storage system.

5. The tyre heating system according to any one of the preceding claims, wherein the tyre heating arrangement comprises a heat radiator connectable to a wheelhouse for the wheel.

6. The tyre heating system according to any one of the preceding claims, wherein the tyre heating arrangement comprises an electrically conductive heating element (402) integrated in the tyre, the electrically conductive heating element comprising an electric resistive material.

7. The tyre heating system according to any one of the preceding claims, wherein the tyre heating system further comprises a temperature sensor (310) configured to measure a temperature level of the tyre, the temperature sensor being connected to the control unit.

8. The tyre heating system according to claim 7, wherein the control circuitry is further configured to:
- receive a signal indicative of an expected vehicle speed for the vehicle at an upcoming point in time,
- estimate a temperature level of the tyre when operating the vehicle at a vehicle speed higher than the expected vehicle speed, and
- control the electric power system to feed electric power to the tyre heating arrangement until a signal indicative of a temperature level of the tyre corresponding to the estimated temperature level for operating the vehicle at the higher speed is received from the temperature sensor.

9. The tyre heating system according to any one of the preceding claims, wherein the control circuitry is configured to determine the energy power absorption capability based on a current state of charge (SoC) of the energy storage system.

10. The tyre heating system according to any one of the preceding claims, wherein the control unit forms part of an upper layer vehicle motion control system (500), and wherein the electric power system comprises an electric power system control unit (502, 502', 502") connected to the upper layer vehicle motion control system, the control circuitry being configured to control the electric power system by transmitting a signal to the electric power system control unit, the signal represents instructions which, when executed by the electric power system control unit, cause the electric power system to feed electric power to the tyre heating arrangement when the electric power generated in the energy generating mode exceeds the energy power absorption capability.

11. The tyre heating system according to claim 10, wherein the tyre heating system comprises a plurality of electric power systems, each one of the plurality of electric power systems comprising a respective electric power system control unit and is connected to a respective tyre heating arrangement, wherein the upper layer vehicle motion control system is configured to control each of the plurality of electric power systems independently from the other electric power systems.

12. A method of controlling a tyre heating system (140) for a vehicle (100), the tyre heating system comprising an electric power system (200) configured to generate electric power by at least one of an electric traction motor (101) and a fuel cell stack (302) of a fuel cell arrangement (300) of the electric power system, wherein the method comprises:
- determining an energy power absorption capability of an energy storage system (120) of the vehicle;
- comparing the energy power absorption capability with the electric power generated by the electric power system; and
- feeding electric power to a tyre heating arrangement (202) when the electric power generated by the electric power system exceeds the energy power absorption capability.

13. A vehicle, comprising a tyre heating system according to any one of claims 1 - 11.

14. A computer program comprising program code means for performing the steps of claim 12 when the program is run on a computer.

15. A computer readable medium carrying a computer program comprising program means for performing the steps of claim 12 when the program means is run on a computer.

## Patentansprüche

1. System zur Reifenerwärmung (140) für ein Fahrzeug (100), das System zur Reifenerwärmung umfassend:
- ein elektrisches Energiesystem (200), wobei das elektrische Energiesystem so konfiguriert ist, dass es einen Energieerzeugungsmodus annimmt, in dem mindestens ein elektrischer Antriebsmotor (101) und/oder ein Brennstoffzellenstapel (302) einer Brennstoffzellenanordnung (300) des elektrischen Energiesystems elektrische Energie erzeugt,
- ein Energiespeichersystem (120), das elektrisch mit dem elektrischen Energiesystem verbunden ist
- eine Reifenerwärmungsanordnung (202), die elektrisch mit dem elektrischen Energiesystem verbunden ist, wobei die Reifenerwärmungsanordnung so konfiguriert ist, dass sie einen Reifen (162) eines Rades (160, 160', 160") des Fahrzeugs durch elektrische Energie erwärmt, die vom elektrischen Energiesystem empfangen wird, und
- eine Steuereinheit (130), die mit dem elektrischen Energiesystem und dem Energiespeichersystem verbunden ist, wobei die Steuereinheit eine Steuerschaltung umfasst, die konfiguriert ist, zum:
- Bestimmen der Fähigkeit des Energiespeichersystems, Energie aufzunehmen;
- Vergleichen der Fähigkeit zur Energieaufnahme mit der von dem elektrischen Energiesystem erzeugten elektrischen Energie, wenn das elektrische Energiesystem den Energieerzeugungsmodus annimmt; und
- das elektrische Energiesystem so zu steuern, dass der Reifenerwärmungsanordnung elektrische Energie zugeführt wird, wenn die im Energieerzeugungsmodus erzeugte elektrische Energie die Fähigkeit zur Energieaufnahme übersteigt.

2. System zur Reifenerwärmung nach Anspruch 1, wobei der elektrische Antriebsmotor konfiguriert ist, um während des Antriebs ein Drehmoment auf das Rad des Fahrzeugs auszuüben und während des Bremsens elektrische Energie zu erzeugen, wobei das elektrische Energiesystem konfiguriert ist, um den Energieerzeugungsmodus anzunehmen, wenn der elektrische Antriebsmotor während des Bremsens elektrische Energie erzeugt.

3. System zur Reifenerwärmung nach einem der Ansprüche 1 oder 2, wobei der elektrische Antriebsmotor ein elektrischer Radnabenmotor ist, der mit einem einzelnen Rad des Fahrzeugs verbindbar ist.

4. System zur Reifenerwärmung nach einem der vorhergehenden Ansprüche, wobei die Brennstoffzellenanordnung elektrisch mit dem Energiespeichersystem verbunden ist.

5. System zur Reifenerwärmung nach einem der vorhergehenden Ansprüche, wobei die Reifenerwärmungsanordnung einen Wärmestrahler umfasst, der mit einem Radkasten für das Rad verbindbar ist.

6. System zur Reifenerwärmung nach einem der vorhergehenden Ansprüche, wobei die Reifenerwärmungsanordnung ein elektrisch leitendes Heizelement (402) umfasst, das in den Reifen integriert ist, wobei das elektrisch leitende Heizelement ein elektrisches Widerstandsmaterial umfasst.

7. System zur Reifenerwärmung nach einem der vorhergehenden Ansprüche, wobei das System zur Reifenerwärmung ferner einen Temperatursensor (310) umfasst, der konfiguriert ist, um ein Temperaturniveau des Reifens zu messen, wobei der Temperatursensor mit der Steuereinheit verbunden ist.

8. System zur Reifenerwärmung nach Anspruch 7, wobei die Steuerschaltung ferner konfiguriert ist, zum:
- Empfangen eines Signals, das eine erwartete Fahrzeuggeschwindigkeit für das Fahrzeug zu einem bevorstehenden Zeitpunkt anzeigt,
- Schätzen eines Temperaturniveaus des Reifens, wenn das Fahrzeug mit einer höheren als der erwarteten Fahrzeuggeschwindigkeit betrieben wird, und
- Steuern des elektrischen Energiesystems, um der Reifenerwärmungsanordnung so lange Energie zuzuführen, bis von dem Temperatursensor ein Signal empfangen wird, das ein Temperaturniveau des Reifens anzeigt, das dem geschätzten Temperaturniveau für den Betrieb des Fahrzeugs mit der höheren Geschwindigkeit entspricht.

9. System zur Reifenerwärmung nach einem der vorhergehenden Ansprüche, wobei die Steuerschaltung konfiguriert ist, um die Fähigkeit zur Energieaufnahme auf der Grundlage eines aktuellen Ladezustands (SoC) des Energiespeichersystems zu bestimmen.

10. System zur Reifenerwärmung nach einem der vorhergehenden Ansprüche, wobei die Steuereinheit Teil eines übergeordneten Fahrzeugbewegungssteuerungssystems (500) ist, und wobei das elektrische Energiesystem eine Steuereinheit (502, 502', 502") des elektrischen Energiesystems umfasst, die mit dem übergeordneten Fahrzeugbewegungssteuerungssystem verbunden ist, wobei die Steuerschaltung konfiguriert ist, um das elektrische Energiesystem durch Übermittlung von einem Signal an die Steuereinheit des elektrischen Energiesystems zu steuern, wobei das Signal Anweisungen darstellt, die, wenn sie von der Steuereinheit des elektrischen Energiesystems ausgeführt werden, bewirken, dass das elektrische Energiesystem der Reifenerwärmungsanordnung elektrische Energie zuführt, wenn der im Energieerzeugungsmodus erzeugte Strom die Fähigkeit zur Energieaufnahme übersteigt.

11. System zur Reifenerwärmung nach Anspruch 10, wobei das System zur Reifenerwärmung mehrere elektrische Energiesysteme umfasst, wobei jedes der mehreren elektrischen Energiesysteme eine entsprechende Steuereinheit für das elektrische Energiesystem umfasst und mit einer entsprechenden Reifenerwärmungsanordnung verbunden ist, wobei das übergeordnete Fahrzeugbewegungssteuerungssystem konfiguriert ist, jedes der mehreren elektrischen Energiesysteme unabhängig von den anderen elektrischen Energiesystemen zu steuern.

12. Verfahren der Kontrolle eines Systems zur Reifenerwärmung (140) für ein Fahrzeug (100), wobei das System zur Reifenerwärmung ein elektrisches Energiesystem (200) umfasst, das so konfiguriert ist, dass es elektrische Energie durch mindestens einen elektrischen Antriebsmotor (101) und/oder einen Brennstoffzellenstapel (302) einer Brennstoffzellenanordnung (300) des elektrischen Energiesystems erzeugt, wobei das Verfahren umfasst:
- Bestimmen einer Fähigkeit zur Energieaufnahme des Energiespeichersystems (120) des Fahrzeugs;
- Vergleichen der Fähigkeit zur Energieaufnahme mit der vom elektrischen Energiesystem erzeugten elektrischen Energie; und
- Zuführen von elektrischer Energie in eine Reifenerwärmungsanordnung (202), wenn die von dem elektrischen Energiesystem erzeugte elektrische Energie die Fähigkeit zur Energieaufnahme übersteigt.

13. Fahrzeug umfassend ein System zur Reifenerwärmung nach einem der Ansprüche 1-11.

14. Computerprogramm mit Programmcodemitteln zur Durchführung der Schritte nach Anspruch 12, wenn das Programm auf einem Computer ausgeführt wird.

15. Computerlesbares Medium mit einem Computerprogramm, das Programmmittel zum Durchführen der Schritte nach Anspruch 12 umfasst, wenn das Programmmittel auf einem Computer ausgeführt wird.

## Revendications

1. Système de chauffage de pneu (140) pour l'véhicule (100), le système de chauffage de pneu comprenant :
- un système d'alimentation électrique (200), le système d'alimentation électrique étant configuré pour adopter un mode de production d'énergie dans lequel au moins un parmi un moteur à traction électrique (101) et un empilement de piles à combustible (302) d'un agencement de piles à combustible (300) du système d'alimentation électrique génère de l'énergie électrique,
- un système de stockage d'énergie (120) relié électriquement au système d'alimentation électrique,
- un dispositif de chauffage de pneu (202) connecté électriquement au système d'alimentation électrique, le dispositif de chauffage de pneu étant configuré pour chauffer un pneu (162) d'une roue (160, 160', 160") du véhicule par l'énergie électrique reçue du système d'alimentation électrique, et
- une unité de commande (130) connectée au système d'alimentation électrique et au système de stockage d'énergie, l'unité de commande comprenant des circuits de commande configurés pour :
- déterminer la capacité d'absorption d'énergie du système de stockage d'énergie ;
- comparer la capacité d'absorption d'énergie avec l'énergie électrique produite par le système d'alimentation électrique lorsque le système d'alimentation électrique adopte le mode de production d'énergie ; et
- commander le système d'alimentation électrique pour alimenter en énergie électrique le dispositif de chauffage de pneu lorsque l'énergie électrique générée en mode de production d'énergie dépasse la capacité d'absorption de puissance énergétique.

2. Système de chauffage de pneu selon la revendication 1, dans lequel le moteur à traction électrique est configuré pour appliquer un couple sur la roue du véhicule pendant la propulsion et pour générer de l'énergie électrique pendant le freinage, le système d'alimentation électrique étant configuré pour adopter le mode de production d'énergie lorsque le moteur à traction électrique génère de l'énergie électrique pendant le freinage.

3. Système de chauffage de pneu selon l'une quelconque des revendications 1 ou 2, dans lequel le moteur à traction électrique est un moteur électrique de moyeu de roue pouvant être connecté à une seule roue du véhicule.

4. Système de chauffage de pneu selon l'une quelconque des revendications précédentes, dans lequel le dispositif de pile à combustible est connecté électriquement au système de stockage d'énergie.

5. Système de chauffage de pneu selon l'une quelconque des revendications précédentes, dans lequel le dispositif de chauffage de pneu comprend un radiateur thermique pouvant être connecté à un passage de roue pour la roue.

6. Système de chauffage de pneu selon l'une quelconque des revendications précédentes, dans lequel le dispositif de chauffage de pneu comprend un élément chauffant électriquement conducteur (402) intégré dans le pneu, l'élément chauffant électriquement conducteur comprenant un matériau électriquement résistif.

7. Système de chauffage de pneu selon l'une quelconque des revendications précédentes, dans lequel le système de chauffage de pneu comprend en outre un capteur de température (310) configuré pour mesurer un niveau de température du pneu, le capteur de température étant connecté à l'unité de commande.

8. Système de chauffage de pneu selon la revendication 7, dans lequel le circuit de commande est en outre configuré pour :
- recevoir un signal indiquant la vitesse attendue du véhicule à un moment donné,
- estimer le niveau de température du pneu lorsque le véhicule roule à une vitesse supérieure à la vitesse attendue du véhicule, et
- commander le système d'alimentation électrique pour fournir de l'énergie électrique au dispositif de chauffage de pneu jusqu'à ce qu'un signal indiquant un niveau de température du pneu correspondant au niveau de température estimé pour faire fonctionner le véhicule à la vitesse supérieure soit reçu du capteur de température.

9. Système de chauffage de pneu selon l'une quelconque des revendications précédentes, dans lequel le circuit de commande est configuré pour déterminer la capacité d'absorption d'énergie sur la base d'un état de charge actuel (SoC) du système de stockage d'énergie.

10. Système de chauffage de pneu selon l'une quelconque des revendications précédentes, dans lequel l'unité de commande fait partie d'un système de commande de mouvement de véhicule de couche supérieure (500), et dans lequel le système d'alimentation électrique comprend une unité de commande de système d'alimentation électrique (502, 502', 502") connectée au système de commande de mouvement de véhicule de couche supérieure, le circuit de commande étant configuré pour commander le système d'alimentation électrique en transmettant un signal à l'unité de commande du système d'alimentation électrique, le signal représentant des instructions qui, lorsqu'elles sont exécutées par l'unité de commande du système d'alimentation électrique, amènent le système d'alimentation électrique à alimenter en énergie électrique le dispositif de chauffage de pneu lorsque la puissance électrique générée dans le mode de production d'énergie dépasse la capacité d'absorption de puissance d'énergie. Récepteur

11. Système de chauffage de pneu selon la revendication 10, le système de chauffage de pneu comprenant une pluralité de systèmes d'alimentation électrique, chacun de la pluralité de systèmes d'alimentation électrique comprenant une unité de commande de système d'alimentation électrique respective et étant connecté dispositif à un agencement de chauffage de pneu respectif, dans lequel le système de commande de mouvement de véhicule de couche supérieure est configuré pour commander chacun de la pluralité de systèmes d'alimentation électrique indépendamment des autres systèmes d'alimentation électrique.

12. Procédé de commande d'un système de chauffage de pneu (140) pour véhicule (100), le système de chauffage de pneu comprenant un système d'alimentation électrique (200) configuré pour générer de l'énergie électrique par au moins un moteur à traction électrique (101) et un empilement de piles à combustible (302) d'un agencement de piles à combustible (300) du système d'alimentation électrique, le procédé comprenant :
- la détermination de la capacité d'absorption d'énergie d'un système de stockage d'énergie (120) du véhicule ;
- la comparaison de la capacité d'absorption de puissance énergétique avec la puissance électrique produite par le système d'alimentation électrique ; et
- l'alimentation en énergie électrique d'un dispositif de chauffage de pneu (202) lorsque l'énergie électrique générée par le système d'alimentation électrique dépasse la capacité d'absorption d'énergie.

13. Véhicule, comprenant un système de chauffage de pneu selon l'une quelconque des revendications 1 à 11.

14. Programme informatique comprenant un moyen de code de programme pour exécuter les étapes de la revendication 12 lorsque le programme est exécuté sur un ordinateur.

15. Support lisible par ordinateur comportant un programme informatique comprenant un moyen de programme pour exécuter les étapes de la revendication 12 lorsque le moyen de programme est exécuté sur un ordinateur.
